# EUROPEAN PATENT SPECIFICATION

(11) **EP 4 310 359 B1**
(45) Date of publication and mention of the grant of the patent: **12.03.2025**
(21) Application number: 22185875.6
(22) Date of filing: 19.07.2022
(51) Int. Cl.: F16D 65/18

(54) **BRAKING SYSTEM AND BRAKING SYSTEM PROVISION METHOD**
BREMSSYSTEM UND BEREITSTELLUNGSVERFAHREN FÜR EIN BREMSSYSTEM
SYSTÈME DE FREINAGE ET PROCÉDÉ DE FOURNITURE D'UN SYSTÈME DE FREINAGE

(43) Date of publication of application: 24.01.2024
(73) Proprietor: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 85652 Pliening (DE); HÖS, Levente, 1047 Budapest (HU); HOLLOSI, Mate, 1097 Budapest (HU); KLINGNER, Matthias, 82275 Emmering (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU)

(56) References cited:
- US-A- 3 367 452
- US-A- 3 371 750
- US-A- 5 590 747
- US-A1- 2020 124 119

## Description

The invention relates to a braking system and braking system provision method and in particular relates to a braking system and braking system provision method for braking systems of road vehicles.

Commercial vehicles, like trucks, tractor units or trailers, comprise braking systems capable of applying braking forces to axles or wheels to decelerate the commercial vehicles during a driving operation or to secure the commercial vehicles against an unintended movement during non-driving operations. Such braking systems usually consist of a main braking system /service braking system and an auxiliary braking system / parking braking system. Usually, the main braking system /service braking system is intended to be used during operation of the vehicle and the auxiliary braking system serves as a backup braking system for the main braking system or provides a continuous locking function to maintain vehicle's position in particular when the vehicle is not operated.

Such braking systems and respective brake actuators are arranged near the axle or wheel to be decelerated or secured. However, the installation space near the axle or wheel is limited.

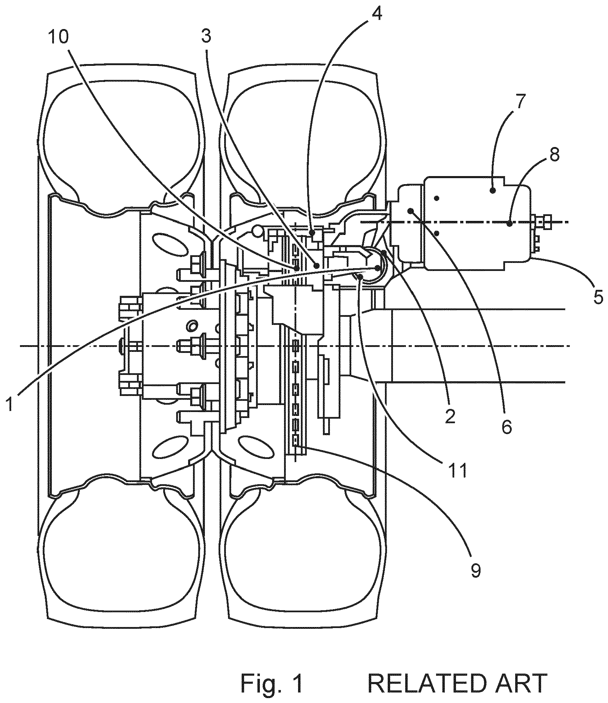

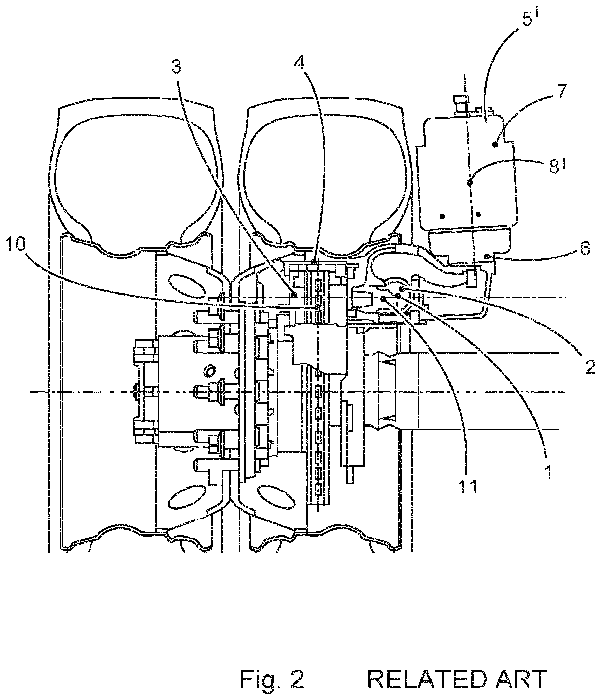

In the related art, braking systems are known that are disc brakes, in particular air disc brakes especially for commercial vehicles, i.e. the deceleration force is generated such that a rotatory braking element like a brake disc is fixed to a wheel or an hub to be braked in a manner that the rotatory braking element rotates conjointly with the wheel or hub. A stationary braking element that is stationary with respect and in contrast to the rotation of the rotatory braking element like a caliper with braking pads is mounted to a vehicle such that it basically remains stationary with respect to the chassis of the vehicle. In such known related art braking systems, the braking pads and the caliper generate a clamping force that acts on the brake disc such that relative movement, in particular relative rotation between the brake disc and the braking pads are slowed down by friction between the brake disc and the braking pads. The force acting on the braking pads is generated via an eccentric lever and an actuator, e.g. an pneumatic actuator. In Fig. 1 and Fig. 2, such related art braking systems are shown. As it can be seen in Fig. 1, a pivotal axis 1 of an eccentric lever 2 extends in parallel to a horizontal caliper plane 3 that is a plane that extends tangentially to a brake disk 9 at the site of a caliper 4. The brake system further comprises an actuator 5 consisting of a service brake portion 6 and a parking brake portion 7 that are arranged in series in a common housing and that act along an actuator axis 8. The exact orientation of the pivotal axis 1 may vary by about 15°.

In an axial brake configuration as shown in Fig. 1, the actuator axis 8 is oriented in parallel to the horizontal caliper plane 3 and perpendicular with a disc center plane 10 that is a plane that extends in parallel to an extension of the brake disc 9, i.e. perpendicular to the rotational axis of the braking disc 9 and is located at the center of the braking disc 9. The exact orientation of the actuator axis 8 may vary by about 15°. In a radial brake configuration as shown in Fig. 2, an actuator 5' may be oriented such that its actuator axis 8' is oriented perpendicular to the horizontal caliper plane 3 and in parallel with a disc center plane 10. The exact orientation of the actuator axis 8 may vary by about 15°. In both cases, a bridge guidance 12 of a bridge 11 is generally oriented perpendicular to the disc center plane 10.

Documents US 2020/124119 A1, US 3 367 452 A and US 5 590 747 A disclose a braking system for a vehicle, comprising: a rotatory braking element that is fixedly connected to a wheel or wheel hub in a manner to rotate conjointly with the wheel, a stationary braking element that is fixedly connected to a vehicle chassis, a brake actuator that is configured to actuate the stationary braking element such as to press the stationary braking element towards the rotatory element, a lever that is configured such that it transfers a force exerted by the brake actuator to the stationary brake element, wherein a pivot axis of the lever is in parallel with a rotational plane of the rotatory braking element and perpendicular to a horizontal caliper plane that is a plane that is oriented tangentially of the rotatory brake element and an actuator axis is in parallel with the rotational plane and the horizontal caliper plane. Document US 3 371 750 A discloses a braking system for a vehicle, comprising: a rotatory braking element that is fixedly connected to a wheel or wheel hub in a manner to rotate conjointly with the wheel, a stationary braking element that is fixedly connected to a vehicle chassis, a brake actuator that is configured to actuate the stationary braking element such as to press the stationary braking element towards the rotatory element, a lever that is configured such that it transfers a force exerted by the brake actuator to the stationary brake element, wherein a pivot axis of the lever is in parallel with a rotational plane of the rotatory braking element and an actuator axis is in parallel with the rotational plane and a horizontal caliper plane.

The related art exhibit the problem that, due to the current arrangement, the braking system including the actuator consumes a significant axial installation space, i.e. a large space along the wheel axis, perpendicular to the disc center plane 10, in case of an axial brake. In case of a radial brake, a significant installation space in a radial direction is required. E.g., a "radial" brake cannot be mounted in 6 o'clock position with the actuator facing downwards, because the parking brake portion could collide with the road surface. Furthermore, it is not possible to separate the service brake portion 6 and parking brake portion 7 and arrange one portion on left and one portion on the right side of eccentric lever 2. This leads to a collision with the wheel rim in case of axial brake of Fig. 1 or to a collision with axle bodies in case of a radial brake. Furthermore, in case of an axial brake, the maximum size of the eccentric lever 2 is limited due to the space between knuckle and rim or axle and rim. Furthermore, in case of a radial brake, the minimum lever size is limited due to the wheel width including tires including snow chains and the actuator diameter.

It is an object of the invention to solve the problems of the related art and to provide a braking system and braking system provision method that allows for providing braking systems requiring less space and having improved space requirements. In particular it is object of the invention to reduce axial and radial installation space especially if a parking brake function is needed and avoid the need of a radial brake which is mostly used on front axles or so-called portal axles in city bus application. Furthermore, the invention provides a solution to arrange the actuators closer to the caliper guidance in order to reduce the dynamic load on the guidance. Furthermore, the invention provides more flexibility to define the lever geometry in order to optimize ratio, progression and hysteresis of the brake mechanism.

The object is solved by the subject-matter of the independent claims. Advantageous further developments are subject-matter of the dependent claims.

Disclosed is a braking system for a vehicle, comprising: a rotatory braking element that is fixedly connected to a wheel or wheel hub in a manner to rotate conjointly with the wheel, a stationary braking element that is fixedly connected to a vehicle chassis, a brake actuator that is configured to actuate the stationary braking element such as to press the stationary braking element towards the rotatory element, a lever that is configured such that it transfers a force exerted by the brake actuator to the stationary brake element, wherein a pivot axis of the lever is in parallel with a rotational plane of the rotatory braking element and perpendicular to a horizontal caliper plane that is a plane that is oriented tangentially of the rotatory brake element and an actuator axis is in parallel with the rotational plane and the horizontal caliper plane.

According to the invention, the brake actuator comprises a main brake actuator and an auxiliary braking actuator that are arranged at different sides of the lever.

Advantageously, a main brake actuator axis and an auxiliary brake actuator axis deviate from a mutual orientation that is parallel to each other.

Advantageously, the main brake actuator axis and the auxiliary brake actuator axis are arranged coaxially with an angle of 5° with respect to the rotational plane. Advantageously, a transfer element is arranged between the lever and the stationary braking element.

Advantageously, the orientation of the transfer element is inclined with respect to the rotational plane, in particular inclined by 4° with respect to the rotation direction. Disclosed is a method of providing a braking system comprising the steps: a) providing a rotatory braking element that is fixedly connected to a wheel or wheel hub in a manner to rotate conjointly with the wheel, b) providing a stationary braking element that is fixedly connected to a vehicle chassis, c) providing a brake actuator that is configured to actuate the stationary braking element such as to press the stationary braking element towards the rotatory element, d) providing a lever that is configured such that it transfers a force exerted by the brake actuator to the stationary brake element, wherein step d) further comprises: da) orienting a pivot axis of the lever in parallel with a rotational plane of the rotatory braking element and perpendicular to a horizontal caliper plane that is a plane that is oriented tangentially of the rotatory brake element, and step c) further comprises ca) orienting an actuator axis in parallel with the rotational plane and the horizontal caliper plane.

According to the invention, step c) comprises: cb) providing a main brake actuator, and cc) providing an auxiliary braking actuator, and cd) arranging the main brake actuator and the auxiliary brake actuator at different sides of the lever.

Advantageously, step cd) further comprises: cda) arranging a main brake actuator axis and an auxiliary brake actuator axis such that they deviate from a mutual orientation that is parallel to each other.

Advantageously, the method further comprises the step: e) providing a transfer element between the lever and the stationary braking element.

In the following, the invention is explained by means of embodiments and the figures.
**Figure 1** exhibits a braking system known from the related art.
**Figure 2** exhibits a further braking system known from the related art.
**Figure 3** exhibits a top view of a braking system according to an embodiment of the invention.
**Figure 4** exhibits an axial view / side view of the braking system according the embodiment.
**Figure 5** exhibits a first modification of the braking system according the embodiment.
**Figure 6** exhibits a second modification of the braking system according the embodiment.

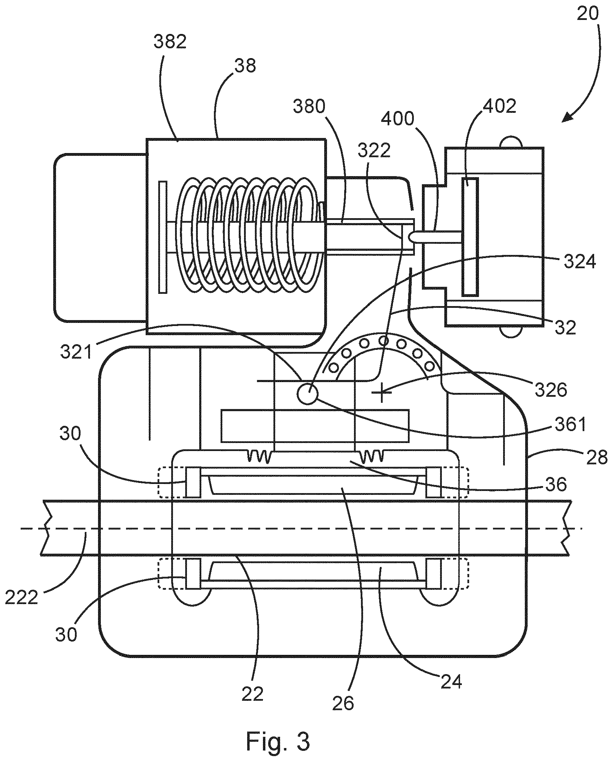

**Fig. 3** exhibits a braking system 20 according to an embodiment of the invention in a top down illustration. The braking system 20 comprises a brake disc 22 as a rotatory braking element having a disc center plane 222, and an outboard brake pad 24, an inboard brake pad 26 and a caliper 28 as stationary braking elements. The outboard brake pad 24 is supported in the caliper 28 by carriers 30 such that the outboard brake pad 24 is rigidly fixed in the caliper. The inboard brake pad 26 is supported in the caliper 28 by the carriers 30 such that it is movable towards and away from the brake disc 22. The caliper 28 and the brake pads 24, 26 are configured such as to form a floating caliper. A lever 32 comprises a shaft that is supported in a needle bearing 235. The center of the shaft and the needle bearing serve as a pivot axis 326 of the lever 32. The lever 32 further comprises a first end portion 321 that is connected to a bridge 35. The lever 32 transfers braking force to a brake slider 36 via the bridge 35. The bridge 35 is configured such as to be adjustable in the angle with which the bridge 35 may transfer force to the brake slider 36. The brake cylinder acts on the inboard braking pad 26. Although the braking system of the embodiment is configured as single piston system, also multi piston systems are applicable. The lever 32 comprises a second end portion 322 that is connected to a parking brake rod 380 on the one side and a service brake rod 400 at the other side.

A parking brake actuator 38 comprises the parking brake rod 380. The parking brake rod is urged inwardly position by a spring arrangement 382 that is located inside the parking brake actuator 38. By that, the parking brake rod 380 and the lever 32 is urged towards a locking position in that braking is applied to the vehicle. In an operative state of the vehicle, the parking brake actuator 38 is kept in an extended configuration by a pneumatic pressure. By that, the parking brake rod 380 is urged towards an extended open position in that no braking is applied via the lever 32.

A service brake actuator 40 contains the service brake rod 400. By a pneumatic cylinder 402, the service brake rod 400 may be urged outwardly. By that, the lever 32 is urged towards a close position.

As it can be seen, the pivotal axis 326 of the lever 32 is oriented perpendicular to a horizontal caliper plane 42 that is a plane that is oriented in a tangential direction of the brake disc 22 at the location of the caliper 28. Deviations of the pivotal axis 326 from that orientation in any direction of up to 15° are possible.

As it can be further seen, the parking brake actuator axis 384 along the parking brake rod 380 and the service brake actuator axis 404 along the service brake rod 400 are arranged parallel to the disc center plane 222 and parallel to the horizontal caliper plane 42. Deviations of the actuator axes 384 and 404 from that orientation in any direction of up to 15° are possible.

Further, as it can be seen in Fig. 3, a service brake portion and a parking brake portion of an actuator may be separated and may be placed on both sides of the second end portion 322 of the lever 32 as the parking brake actuator 38 and the service brake actuator 40.

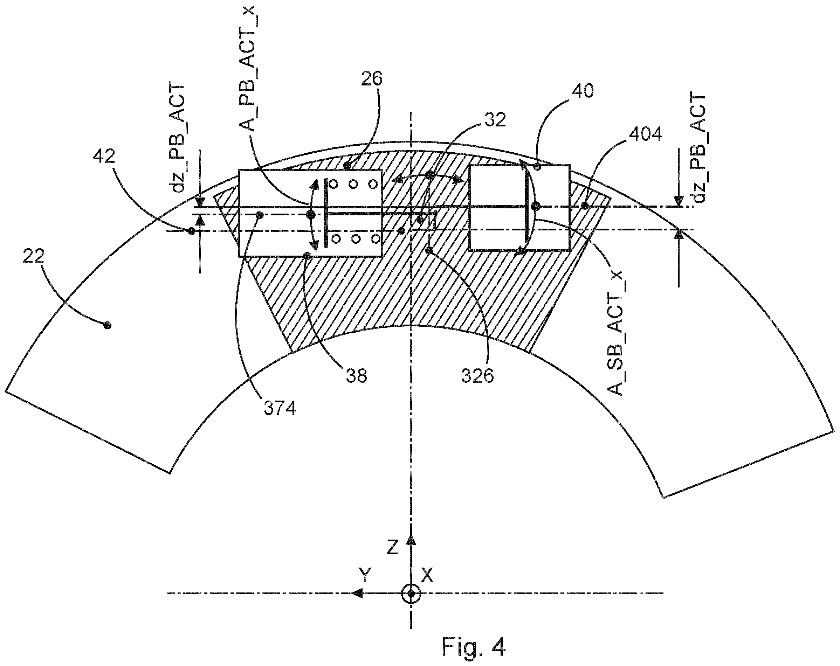

**Fig. 4** exhibits the braking system 20 of the embodiment of the invention in a side view.

In the embodiment, the parking brake actuator axis 384 and the service brake actuator axis 404 are parallel to each other.

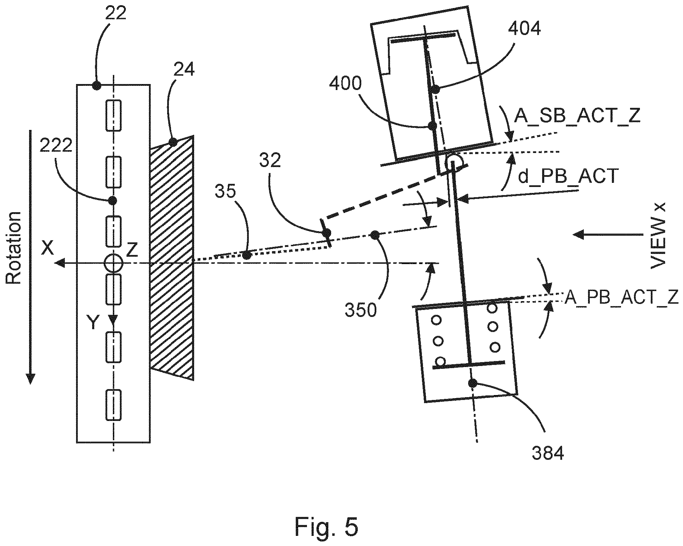

**Fig. 5** exhibits a first modification of the embodiment. In the embodiment, the bridge guide plane 350 of the bridge 35 that defines the direction of possible movement of the bridge 35, is oriented perpendicular to the disc center plane 222 in parallel with a wheel hub. However, with the arrangement of the embodiment, it is optionally possible to adjust the inclination of the bridge guide plane 350 to an angle different from perpendicular to the disc center plane 222.

Further the inclinations of the parking brake actuator axis 384 and the service brake actuator axis 404 may be varied with respect to the disc center plane 222 depending e.g. on the size of the parking brake actuator 38 and the service brake actuator 40 or other parts of the vehicle.

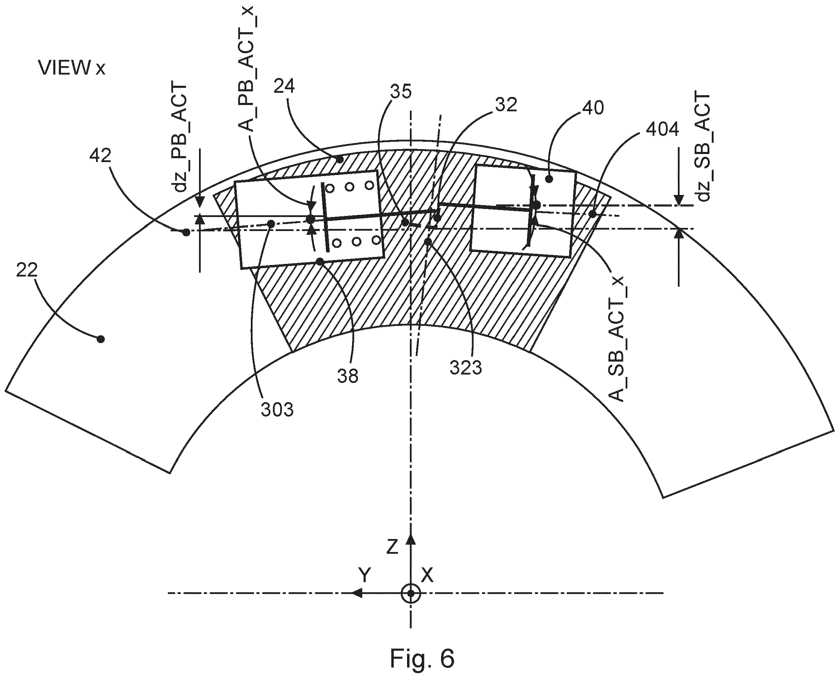

**Fig. 6** exhibits a second modification of the embodiment. As it can be seen in conjunction with **Fig. 5****,** the axis of the parking brake actuator 38 and the service brake actuator 40 can have different inclination angles (A_SB_ACT_x and A_PB_ACT_x and A_SB_ACT_z and A_PB_ACT_z) or an offset between the parking brake actuator 38 and the service brake actuator 40 (dx_PB_ACT and dz_PB_ACT). The service brake actuator 40 can have an offset from neutral bridge plane 42 (horizontal caliper plane) which is representing the height of bridge / plunger (dz_SB_ACT).

In particular, the parking brake actuator 38 and the service brake actuator 40 may be arranged coaxial with an angle of 5° (A_SB_ACT_x and A_PB_ACT_x the bridge inclination is 4° (A_BRIDGE_GUIDE_NEUT) respectively to the rotation direction.

The invention was described by means of an embodiment. The embodiment is only of explanatory nature and does not restrict the invention as defined by the claims. As recognizable by the skilled person, deviations from the embodiment are possible without leaving the invention that is defined according to the scope of the claimed subject-matter.

For example, as a service brake, a pneumatic brake was employed. However, also electromechanical or hydraulic brake systems may be employed there.

For example, the parking brake actuator is configured as a pulling actuator and the service brake actuator is configured as a pushing actuator in the embodiment. However, also mere pushing actuators or pulling actuators or any mix of them may be applied mutatis mutandis.

For example, the caliper 28 is a floating caliper in the embodiment. However, any other kind of caliper is applicable, in particular fixed calipers.

Different embodiments may be combined. In particular the first modification and the second modification may be combined.

A commercial vehicle in the sense of this document is any vehicle, either self-driven or towed, for transporting goods or freight. These are in particular HGV, trucks, tractor units or trailers.

A main brake system or service brake system in the sense of this document is a brake system that is configured to serve for vehicle deceleration during operation, in particular during movement of the vehicle.

An auxiliary brake system/actuator or parking brake system/actuator in the sense of this document is a brake system/actuator that is configured to serve as a backup for the main brake system/actuator and that is configured to provide a continuous locking function to maintain a vehicle's position.

A horizontal caliper plane is a plane that extends tangentially of a brake disc at the location of the brake disc's caliper. Thus, the horizontal caliper plane is horizontal in a case when the caliper is arranged at a 12 o'clock position of the brake disc like in the embodiment. However, if the caliper is arranged at a different position, the horizontal caliper plane is not necessarily horizontal with respect to the usual orientation of the vehicle. In a case when the caliper is arranged at a 9 or 3 o'clock position of the brake disc, the horizontal caliper plane may be even oriented vertically.

In this document, as far as an axis is described as having a specific orientation, e.g. like being parallel to a disc center plane and a horizontal caliper plane, this description encompasses any orientation of that axis within a 15° angle range of deviation in any direction from that worded orientation.

In this document, a wheel axle - as far as a stationary braking element is connected thereto - refers to a non-rotating axle or - e.g. in case of a driven wheel - to a non-rotating part of the axle like an axle casing.

In this document, the terms "and", "or" and "either ... or" are used as conjunctions in a meaning similar to the logical conjunctions "AND", "OR" (often also "and/or") or "XOR", respectively. In particular, in contrast to "either ... or", the term "or" also includes occurrence of both operands.

Method steps indicated in the description or the claims only serve an enumerative purpose of the method steps. They only imply a given sequence or an order where their sequence or order is explicitly expressed or is - obvious for the skilled person - mandatory due to their nature. In particular, the listing of method steps do not imply that this listing is exhaustive. Also, not all method steps described in an embodiment are required to implement the invention. The required method steps are defined by the claims only.

In the claims, the word "comprising" does not exclude other elements or steps, and the indefinite article "a" or "an" does not exclude a plurality and has to be understood as "at least one".

## Claims

1. A braking system (20) for a vehicle, comprising:
a rotatory braking element (22) that is fixedly connected to a wheel or wheel hub in a manner to rotate conjointly with the wheel,
a stationary braking element (24, 26) that is directly or indirectly connected to a vehicle chassis such that its movement is restricted as to not rotate conjointly with the wheel,
- a brake actuator (38, 40) that is configured to actuate the stationary braking element (24, 26) such as to urge the stationary braking element (38, 40) towards the rotatory braking element (22),
a lever (32) that is configured such that it transfers a force exerted by the brake actuator (38, 40) to the stationary brake element (24, 26),
wherein
a pivot axis of the lever (32) is in parallel with a rotational plane (222) of the rotatory braking element (22) and perpendicular to a horizontal caliper plane (42) that is a plane that is oriented tangentially of the rotatory brake element (22) and
an actuator axis (384, 404) is in parallel with the rotational plane (222) and the horizontal caliper plane (42), **characterized in that** the brake actuator comprises a main brake actuator (40) and an auxiliary brake actuator (38), that are arranged at mutually different sides of the lever (32).

2. The braking system (20) according to the previous claim, wherein a main brake actuator axis (404) and an auxiliary brake actuator axis (384) deviate from a mutual orientation that is parallel to each other.

3. The braking system (20) according to claim 1, wherein the main brake actuator axis (404) and the auxiliary brake actuator axis (384) are arranged coaxially with an angle of 0° to 5°, 5° to 10° or 10° to 15°, preferably 5° with respect to the rotational plane (222) and/or the horizontal caliper plane (222).

4. The braking system (20) according to any of the previous claims, having a transfer element (35) arranged between the lever (32) and the stationary braking element (24, 26).

5. The braking system (20) according to the previous claim, wherein the orientation of the transfer element (35) is inclined with respect to the rotational plane (222) such as to deviate from a plane perpendicular or the rotary plane (222) and a rotational axis of the rotatory braking element (22), in particular inclined by 0° to 5°, 5° to 10° or 10° to 15°, preferably 4° with respect to the rotation direction.

6. A method of providing a braking system (20) according any of claims 1 to 5 comprising the steps:
a) providing a rotatory braking element (22) that is fixedly connected to a wheel or wheel hub in a manner to rotate conjointly with the wheel,
b) providing a stationary braking element (24, 26) that is fixedly connected to a vehicle chassis,
c) providing a brake actuator (38, 40) that is configured to actuate the stationary braking element (24, 26) such as to press the stationary braking element (38, 40) towards the rotatory element,
d) providing a lever (32) that is configured such that it transfers a force exerted by the brake actuator (38, 40) to the stationary brake element (24, 26),
wherein step d) further comprises:
da) orienting a pivot axis of the lever (32) in parallel with a rotational plane (222) of the rotatory braking element (22) and perpendicular to a horizontal caliper plane (42) that is a plane that is oriented tangentially of the rotatory brake element (22)
and step c) further comprises
ca) orienting an actuator axis (384, 404) in parallel with the rotational plane (222) and the horizontal caliper plane (42),wherein step c) comprises:
cb) providing a main brake actuator (40) and
cc) providing an auxiliary braking actuator (38),
cd) arranging the main brake actuator (40) and the auxiliary brake actuator (38) at different sides of the lever (32).

7. The method according to the previous method claim, wherein step cd) further comprises:
cda) arranging a main brake actuator axis (404) and an auxiliary brake actuator axis (384) such that they deviate from a mutual orientation that is parallel to each other.

8. The method according to any of the previous method claims, further comprising the step:
e) providing a transfer element (35) between the lever (32) and the stationary braking element (24, 26).

## Patentansprüche

1. Bremssystem (20) für ein Fahrzeug, umfassend:
ein rotatorisches Bremselement (22), das fest mit einem Rad oder einer Radnabe verbunden ist, sodass es zusammen mit dem Rad rotiert,
ein stationäres Bremselement (24, 26), das direkt oder indirekt derart mit einem Fahrzeugfahrgestell verbunden ist, dass seine Bewegung eingeschränkt ist, sodass es nicht zusammen mit dem Rad rotiert,
eine Bremsbetätigungsvorrichtung (38, 40), die dazu konfiguriert ist, das stationäre Bremselement (24, 26) derart zu betätigen, dass es das stationäre Bremselement (38, 40) zu dem rotatorischen Bremselement (22) hin zwängt,
einen Hebel (32), der derart konfiguriert ist, dass er eine von der Bremsbetätigungsvorrichtung (38, 40) ausgeübte Kraft auf das stationäre Bremselement (24, 26) überträgt,
wobei
eine Schwenkachse des Hebels (32) parallel zu einer Rotationsebene (222) des rotatorischen Bremselements (22) und senkrecht zu einer horizontalen Bremssattelebene (42) verläuft, bei der es sich um eine Ebene handelt, die tangential zum rotatorischen Bremselement (22) ausgerichtet ist, und
eine Betätigungsvorrichtungsachse (384, 404) parallel zur Rotationsebene (222) und der horizontalen Bremssattelebene (42) verläuft, **dadurch gekennzeichnet, dass** die Bremsbetätigungsvorrichtung eine Hauptbremsbetätigungsvorrichtung (40) und eine Hilfsbremsbetätigungsvorrichtung (38) umfasst, die auf voneinander unterschiedlichen Seiten des Hebels (32) angeordnet sind.

2. Bremssystem (20) nach dem vorstehenden Anspruch, wobei eine Hauptbremsbetätigungsvorrichtungsachse (404) und eine Hilfsbremsbetätigungsvorrichtungsachse (384) von einer gegenseitigen Ausrichtung, die parallel zueinander verläuft, abweichen.

3. Bremssystem (20) nach Anspruch 1, wobei die Hauptbremsbetätigungsvorrichtungsachse (404) und die Hilfsbremsbetätigungsvorrichtungsachse (384) koaxial mit einem Winkel von 0° bis 5°, 5° bis 10° oder 10° bis 15°, bevorzugt 5°, in Bezug auf die Rotationsebene (222) und/oder die horizontale Bremssattelebene (222) angeordnet sind.

4. Bremssystem (20) nach einem der vorstehenden Ansprüche, das ein Übertragungselement (35) aufweist, das zwischen dem Hebel (32) und dem stationären Bremselement (24, 26) angeordnet ist.

5. Bremssystem (20) nach dem vorstehenden Anspruch, wobei die Ausrichtung des Übertragungselements (35) in Bezug auf die Rotationsebene (222) derart geneigt ist, dass es von einer senkrechten Ebene oder der Rotationsebene (222) und einer Rotationsachse des rotatorischen Bremselements (22) abweicht, insbesondere um 0° bis 5°, 5° bis 10° oder 10° bis 15°, bevorzugt 4°, in Bezug auf die Rotationsrichtung geneigt ist.

6. Verfahren zum Bereitstellen eines Bremssystems (20) nach einem der Ansprüche 1 bis 5, das die folgenden Schritte umfasst:
a) Bereitstellen eines rotatorischen Bremselements (22), das fest mit einem Rad oder einer Radnabe verbunden ist, sodass es zusammen mit dem Rad rotiert,
b) Bereitstellen eines stationären Bremselements (24, 26), das fest mit einem Fahrzeugfahrgestell verbunden ist,
c) Bereitstellen einer Bremsbetätigungsvorrichtung (38, 40), die dazu konfiguriert ist, das stationäre Bremselement (24, 26) derart zu betätigen, dass es das stationäre Bremselement (38, 40) zu dem rotatorischen Element hin drückt,
d) Bereitstellen eines Hebels (32), der derart konfiguriert ist, dass er eine von der Bremsbetätigungsvorrichtung (38, 40) ausgeübte Kraft auf das stationäre Bremselement (24, 26) überträgt,
wobei Schritt d) weiter umfasst:
da) Ausrichten einer Schwenkachse des Hebels (32) parallel zu einer Rotationsebene (222) des rotatorischen Bremselements (22) und senkrecht zu einer horizontalen Bremssattelebene (42), bei der es sich um eine Ebene handelt, die tangential zum rotatorischen Bremselement (22) ausgerichtet ist, und Schritt c) weiter umfasst
ca) Ausrichten einer Betätigungsvorrichtungsachse (384, 404) parallel zur Rotationsebene (222) und der horizontalen Bremssattelebene (42), wobei Schritt c) umfasst:
cb) Bereitstellen einer Hauptbremsbetätigungsvorrichtung (40), und
cc) Bereitstellen einer Hilfsbremsbetätigungsvorrichtung (38),
cd) Anordnen der Hauptbremsbetätigungsvorrichtung (40) und der Hilfsbremsbetätigungsvorrichtung (38) auf unterschiedlichen Seiten des Hebels (32).

7. Verfahren nach dem vorstehenden Verfahrensanspruch, wobei Schritt cd) weiter umfasst:
cda) Anordnen einer Hauptbremsbetätigungsvorrichtungsachse (404) und einer Hilfsbremsbetätigungsvorrichtungsachse (384) derart, dass sie von einer gegenseitigen Ausrichtung, die parallel zueinander verläuft, abweichen.

8. Verfahren nach einem der vorstehenden Verfahrensansprüche, das weiter den folgenden Schritt umfasst:
e) Bereitstellen eines Übertragungselements (35) zwischen dem Hebel (32) und dem stationären Bremselement (24, 26).

## Revendications

1. Système de freinage (20) pour un véhicule, comprenant :
un élément de freinage rotatif (22) qui est relié à demeure à une roue ou à un moyeu de roue de manière à tourner conjointement avec la roue,
un élément de freinage fixe (24, 26) qui est relié directement ou indirectement à un châssis de véhicule de telle sorte que son déplacement est limité de manière à ne pas tourner conjointement avec la roue,
un actionneur (38, 40) de frein qui est configuré pour actionner l'élément de freinage fixe (24, 26) de manière à pousser l'élément de freinage fixe (38, 40) vers l'élément de freinage rotatif (22),
un levier (32) qui est configuré de telle sorte qu'il transfère une force exercée par l'actionneur (38, 40) de frein à l'élément de frein fixe (24, 26),
dans lequel
un axe de pivotement du levier (32) est parallèle à un plan de rotation (222) de l'élément de freinage rotatif (22) et perpendiculaire à un plan d'étrier horizontal (42) qui est un plan qui est orienté tangentiellement à l'élément de freinage rotatif (22) et
un axe (384, 404) d'actionneur est parallèle au plan de rotation (222) et au plan d'étrier horizontal (42), **caractérisé en ce que** l'actionneur de frein comprend un actionneur de frein principal (40) et un actionneur de frein auxiliaire (38), qui sont agencés au niveau de côtés mutuellement différents du levier (32).

2. Système de freinage (20) selon la revendication précédente, dans lequel un axe (404) d'actionneur de frein principal et un axe (384) d'actionneur de frein auxiliaire s'écartent d'une orientation mutuelle qui est parallèle l'un à l'autre.

3. Système de freinage (20) selon la revendication 1, dans lequel l'axe (404) d'actionneur de frein principal et l'axe (384) d'actionneur de frein auxiliaire sont agencés coaxialement avec un angle de 0° à 5°, de 5° à 10° ou de 10° à 15°, de préférence de 5° par rapport au plan de rotation (222) et/ou au plan d'étrier horizontal (222).

4. Système de freinage (20) selon l'une quelconque des revendications précédentes, présentant un élément de transfert (35) agencé entre le levier (32) et l'élément de freinage fixe (24, 26).

5. Système de freinage (20) selon la revendication précédente, dans lequel l'orientation de l'élément de transfert (35) est inclinée par rapport au plan de rotation (222) de manière à s'écarter d'un plan perpendiculaire ou du plan de rotation (222) et d'un axe de rotation de l'élément de freinage rotatif (22), en particulier incliné de 0° à 5°, de 5° à 10° ou de 10° à 15°, de préférence de 4° par rapport à la direction de rotation.

6. Procédé de fourniture d'un système de freinage (20) selon l'une quelconque des revendications 1 à 5 comprenant les étapes :
a) de fourniture d'un élément de freinage rotatif (22) qui est relié à demeure à une roue ou à un moyeu de roue de manière à tourner conjointement avec la roue,
b) de fourniture d'un élément de freinage fixe (24, 26) qui est relié à demeure à un châssis de véhicule,
c) de fourniture d'un actionneur (38, 40) de frein qui est configuré pour actionner l'élément de freinage fixe (24, 26) de manière à presser l'élément de freinage fixe (38, 40) vers l'élément rotatif,
d) de fourniture un levier (32) qui est configuré de telle sorte qu'il transfère une force exercée par l'actionneur (38, 40) de frein à l'élément de frein fixe (24, 26),
dans lequel l'étape d) comprend en outre :
da) l'orientation d'un axe de pivotement du levier (32) parallèlement à un plan de rotation (222) de l'élément de freinage rotatif (22) et perpendiculairement à un plan d'étrier horizontal (42) qui est un plan qui est orienté tangentiellement à l'élément de freinage rotatif (22) et l'étape c) comprend en outre
ca) l'orientation d'un axe (384, 404) d'actionneur parallèlement au plan de rotation (222) et au plan d'étrier horizontal (42), dans lequel l'étape c) comprend :
cb) la fourniture d'un actionneur de frein principal (40) et
cc) la fourniture d'un actionneur de frein auxiliaire (38),
cd) l'agencement de l'actionneur de frein principal (40) et de l'actionneur de frein auxiliaire (38) au niveau de côtés différents du levier (32).

7. Procédé selon la revendication de procédé précédente, dans lequel l'étape cd) comprend en outre :
cda) l'agencement d'un axe (404) d'actionneur de frein principal et d'un axe (384) d'actionneur de frein auxiliaire de telle sorte qu'ils s'écartent d'une orientation mutuelle qui est parallèle l'un à l'autre.

8. Procédé selon l'une quelconque des revendications de procédé précédentes, comprenant en outre l'étape de :
e) fourniture d'un élément de transfert (35) entre le levier (32) et l'élément de freinage fixe (24, 26).
